# EUROPEAN PATENT APPLICATION

(11) **EP 4 585 476 A1**
(43) Date of publication of application: **16.07.2025**
(21) Application number: 24220606.8
(22) Date of filing: 17.12.2024
(51) Int. Cl.: B60T 7/12, B60K 28/10, B60T 13/74, B60T 17/22, F16D 65/18, F16D 121/24, F16D 127/06, F16D 129/10

(54) **WHEEL BRAKE APPARATUS AND ELECTROMECHANICAL BRAKE SYSTEM WITH OVER-TEMPERATURE PROTECTION, AND ELECTRIC VEHICLE**

(30) Priority: 29.12.2023 CN 202311867727
(71) Applicant: Huawei Digital Power Technologies Co., Ltd., Shenzhen, Guangdong 518043 (CN)
(72) Inventor: TANG, Jiayu, Shenzhen, 518043 (CN); HUANG, Chongxi, Shenzhen, 518043 (CN); NI, Hui, Shenzhen, 518043 (CN)
(74) Representative: Gill Jennings & Every LLP

(57) **Abstract**

A wheel brake apparatus (13) and an electromechanical brake system (10) with a function of over-temperature protection for a brake motor, and an electric vehicle (01). The wheel brake apparatus (13) includes a service brake unit (131), a parking brake unit (132), and a wheel controller (133). In a braking process of the electric vehicle (01), the wheel controller (133) is configured to: in response to that a winding temperature of a brake motor (1131) is greater than or equal to a first temperature, control the brake motor (1131) to reduce an output torque, and control the parking brake unit (132) to output a brake force for parking; or in response to that a torque output by a brake motor (1131) is greater than or equal to a first preset torque, control the brake motor (1131) to reduce the output torque, and control the parking brake unit (132) to output a brake force for parking. The wheel brake apparatus (13) and the electromechanical brake system (10) can reduce heat load of the brake motor (1131) of the electric vehicle (01), increase an operating life of the brake motor (1131), and improve operation reliability of the electric vehicle (01), without increasing hardware costs.

## Description

### TECHNICAL FIELD

This application relates to the field of electric vehicle braking, and in particular, to a wheel brake apparatus and an electromechanical brake system with a function of over-temperature protection for a brake motor, and an electric vehicle.

### BACKGROUND

An electromechanical brake system develops rapidly due to advantages of higher safety, faster response, and simpler structure. An electromechanical brake apparatus usually includes a brake actuator and a brake motor. The brake actuator is in transmission connection to a motor shaft of the brake motor. The brake motor is configured to drive the brake actuator to clamp or release a brake disc. During service braking, the brake motor of the electromechanical brake apparatus drives the brake actuator to clamp the brake disc, to brake a vehicle. In many service braking scenarios of an electric vehicle, for example, when a driver presses a brake pedal for a long time while waiting at a red light, or when the vehicle is stopped on a slope with an engine running, the brake motor of the electromechanical brake system outputs a torque for a long time and therefore is in a stalled state. Due to the brake motor being in the stalled state for a long time, a temperature of a winding of the brake motor rises rapidly. Consequently, a temperature of the brake motor is excessively high, causing a decrease in a service life of the motor. This affects braking safety of the vehicle. In conventional technologies, heat dissipation performance of the brake motor is generally improved by changing a heat dissipation structure of the brake motor. However, changing the heat dissipation structure results in higher hardware costs.

### SUMMARY

This application provides a wheel brake apparatus and an electromechanical brake system with a function of over-temperature protection for a brake motor, and an electric vehicle, to reduce heat load of a brake motor of the electric vehicle, increase an operating life of the brake motor, and improve operation reliability of the electric vehicle, without increasing hardware costs of the electric vehicle.

According to a first aspect, this application provides a wheel brake apparatus with a function of over-temperature protection for a brake motor, used in an electric vehicle. The wheel brake apparatus includes a service brake unit and a parking brake unit. The service brake unit includes a brake motor and a brake actuator. The brake motor is configured to output a torque to drive the brake actuator to clamp a brake disc of the electric vehicle. The parking brake unit is configured to lock the brake motor. In a braking process of the electric vehicle, in response to that a temperature of the brake motor is greater than or equal to a preset temperature or that the torque output by the brake motor is greater than or equal to a preset torque for first preset duration, the parking brake unit locks the brake motor, and the brake motor reduces the output torque.

The wheel brake apparatus provided in this application includes a service brake unit and a parking brake unit. The service brake unit mainly outputs a brake force to the brake disc during brake force of the electric vehicle, so that the electric vehicle completes a braking process. The parking brake unit mainly outputs a brake force for parking to the brake disc during parking of the electric vehicle, so that the electric vehicle completes a parking process. In the braking process of the electric vehicle, the brake motor is configured to output the torque to drive the brake actuator to output a brake force to the brake disc, and the brake motor is usually in a stalled state, causing the temperature of the brake motor to rise rapidly. In this case, the brake motor is in a high-temperature state for a long time; consequently, a service life of the brake motor is decreased, and operation reliability of the brake motor is affected. When the temperature of the brake motor is relatively high, the wheel brake apparatus provided in this application may control the parking unit to output the brake force for parking, so that the brake motor can reduce the output torque. In this case, a drive current passing through a winding of the brake motor is reduced, and heat generated on the winding of the brake motor is also reduced. In this way, heat load of the brake motor can be reduced, an operating life of the brake motor can be increased, and safety and reliability of the brake motor can be improved. That the torque output by the brake motor is greater than or equal to the preset torque for the first preset duration may be used as an indirect basis for determining that the brake motor is over temperature.

It should be noted that, in a process in which the brake motor reduces the output torque according to this application, the torque output by the brake motor may be directly reduced to zero, or may be reduced to a specific torque, to reduce the drive current in the winding of the brake motor and therefore alleviate a heat generation problem of the brake motor. In an implementation, the torque of the brake motor is reduced to 50% of the preset torque. In an embodiment, the torque of the brake motor is directly reduced to zero, and as a result, the drive current in a winding of the brake motor is reduced to zero.

In an implementation of the first aspect, in the braking process of the electric vehicle, in response to that the temperature of the brake motor is greater than or equal to the preset temperature and a rotation speed of the drive motor, a vehicle speed of the electric vehicle, or a wheel speed of wheels of the electric vehicle is less than a preset speed, the brake motor reduces the output torque, and a parking motor drives a parking brake actuator to lock the brake motor; or in response to that the torque output by the brake motor is greater than or equal to a first preset torque for the first preset duration and a rotation speed of the drive motor, a vehicle speed of the electric vehicle, or a wheel speed of wheels of the electric vehicle is less than a preset speed, the brake motor reduces the output torque, and a parking motor drives a parking brake actuator to lock the brake motor.

In an implementation of the first aspect, in the braking process of the electric vehicle, in response to that the temperature of the brake motor is greater than or equal to the preset temperature and the rotation speed of the drive motor, the vehicle speed of the electric vehicle, or the wheel speed of the wheels of the electric vehicle is zero, the brake motor reduces the output torque, and the parking motor drives the parking brake actuator to lock the brake motor; or in response to that the torque output by the brake motor is greater than or equal to the first preset torque for the first preset duration and the rotation speed of the drive motor, the vehicle speed of the electric vehicle, or the wheel speed of the wheels of the electric vehicle is zero, the brake motor reduces the output torque, and the parking motor drives the parking brake actuator to lock the brake motor.

In an implementation of the first aspect, the brake actuator is configured to output a clamping force to the brake disc, where the clamping force is used to generate a brake force between the brake actuator and the brake actuator, and in the braking process of the electric vehicle, in response to that a travel of a brake pedal is greater than or equal to a preset travel for a second preset duration, the brake motor reduces the output torque, and a parking motor drives a parking brake actuator to lock the brake motor; or
in response to that the clamping force output by the brake actuator is greater than a preset clamping force for the first preset duration, the brake motor reduces the output torque, and a parking motor drives a parking brake actuator to lock the brake motor.

In the braking process of the electric vehicle, if a driver deeply presses the brake pedal for a long time, a wheel controller determines that the brake motor is in the stalled state and prone to be over temperature, and the wheel controller controls the brake motor to reduce the output torque.

In an implementation of the first aspect, the wheel brake apparatus further includes the wheel controller, and in the braking process of the electric vehicle, the wheel controller is configured to: control the brake motor to reduce the output torque, and control the parking motor to drive the parking brake actuator to lock the brake motor.

In an implementation of the first aspect, the wheel controller is configured to: first control the parking motor to drive the parking brake actuator to lock the brake motor, and then control the brake motor to reduce the output torque.

In an implementation of the first aspect, in a process in which the brake motor stops outputting the torque and the parking motor is controlled to drive the parking brake actuator to lock the brake motor, a higher temperature of the brake motor indicates a larger amount by which the torque output by the brake motor is reduced. In the braking process of the electric vehicle, a higher temperature of the brake motor indicates that the wheel controller is configured to control the parking unit to output a larger brake force for parking, so that the torque output by the brake motor can be reduced more. This is more conducive to alleviation of an over-temperature problem of the brake motor.

In an implementation of the first aspect, the wheel controller is configured to receive a torque signal, and in the braking process of the electric vehicle, the wheel controller is configured to: in response to that a winding temperature of the brake motor decreases from greater than or equal to a first preset temperature to less than the first preset temperature, control the parking motor to drive the parking brake actuator to unlock the brake motor; or in response to that a torque indicated by the torque signal decreases from greater than or equal to the first preset torque to less than the first preset torque, first control the parking motor to unlock the brake motor, and then control the brake motor to output the torque indicated by the torque signal.

In an implementation of the first aspect, the wheel controller is configured to: in response to a brake signal, control the service brake unit to output a brake force, or control the parking brake unit to output a brake force for parking, where the brake signal includes at least one of a travel signal of the brake pedal, a brake signal from an autonomous driving system, or a brake signal from a vehicle stability system.

In an implementation of the first aspect, the wheel controller is configured to: in response to stopping receiving a brake signal when controlling the parking motor to drive the parking brake actuator to lock the brake motor, control the parking motor to unlock the brake motor, and control the brake motor to stop outputting the torque.

In an implementation of the first aspect, the parking brake actuator includes a pawl and a ratchet wheel, the ratchet wheel is sleeved on a rotor of the brake motor, and the parking motor is configured to drive the pawl to work with the ratchet wheel to lock the brake motor.

In an implementation of the first aspect, the wheel brake apparatus further includes a temperature sensor and a clamping force sensor, and the wheel controller is configured to receive a brake motor temperature signal from the temperature sensor and a clamping force signal from the clamping force sensor, where the brake motor temperature signal indicates the temperature of the brake motor, and the clamping force signal indicates the clamping force output by the brake actuator.

In an implementation of the first aspect, the wheel controller includes a brake motor power circuit, a parking motor power circuit, and a control circuit. The brake motor power circuit includes a three-phase bridge arm, and a bridge arm midpoint of the three-phase bridge arm of the brake motor power circuit is configured to connect to a three-phase winding of the brake motor. The parking motor power circuit includes a three-phase bridge arm, and a bridge arm midpoint of the three-phase bridge arm of the parking motor power circuit is configured to connect to a three-phase winding of the parking motor. The control circuit is configured to: receive the brake signal, and control the bridge arm midpoint of the three-phase bridge arm of the brake motor power circuit to output a brake motor drive current or control the bridge arm midpoint of the three-phase bridge arm of the parking motor power circuit to output a parking motor drive current.

According to a second aspect, this application provides an electromechanical brake system with a function of over-temperature protection for a brake motor, used in an electric vehicle. The electromechanical brake system includes four wheel brake apparatuses and a central controller. At least one of the four wheel brake apparatuses includes a service brake unit and a parking brake unit. The service brake unit includes a brake motor and a brake actuator. The brake motor is configured to: when the electric vehicle is in a braking state, output a torque to drive braking and drive the brake actuator to output a brake force to a brake disc. The parking unit is configured to lock the brake motor. In a braking process of the electric vehicle, the central controller is configured to: in response to that a temperature of the brake motor is greater than or equal to a preset temperature, control the at least one wheel brake apparatus to reduce the output torque and to lock the brake motor; or in response to that the torque output by the brake motor is greater than or equal to a preset torque for first preset duration, control the at least one wheel brake apparatus to reduce the output torque and to lock the brake motor.

In an implementation of the second aspect, in the braking process of the electric vehicle, the central controller is configured to: in response to that the temperature of the brake motor is greater than or equal to the preset temperature and a rotation speed of a drive motor, a vehicle speed of the electric vehicle, or a wheel speed of wheels of the electric vehicle is less than a preset speed, control the at least one wheel brake apparatus to reduce the output torque and to lock the brake motor; or in response to that the torque output by the brake motor is greater than or equal to a first preset torque for the first preset duration and a rotation speed of a drive motor, a vehicle speed of the electric vehicle, or a wheel speed of wheels of the electric vehicle is less than the preset speed, control the at least one wheel brake apparatus to reduce the output torque and to lock the brake motor.

In an implementation of the second aspect, the wheel brake apparatus includes a wheel controller, and the central controller is configured to: in response to a brake signal, output a control signal to the wheel controller; and the wheel controller is configured to: in response to the control signal, control the brake motor to reduce the output torque, and control the parking unit to lock the brake motor. The brake signal indicates that the electric vehicle is in a braking state, and the brake signal includes at least one of a travel signal of a brake pedal, a brake signal from an autonomous driving system, or a brake signal from a vehicle stability system.

According to a third aspect, this application provides an electric vehicle. The electric vehicle includes a drive system and the electromechanical brake system according to any one of the implementations of the second aspect. The drive system includes a motor controller and a drive motor. The drive motor is configured to generate an induced current with rotation of wheels in a braking process of the electric vehicle. In the braking process of the electric vehicle, the motor controller is configured to: in response to that a temperature of the brake motor is greater than or equal to a preset temperature, control the drive motor to increase the induced current generated with rotation of the wheels; or in response to that a torque output by the brake motor is greater than or equal to a preset torque for first preset duration, control the drive motor to increase the induced current generated with rotation of the wheels.

When the temperature of the brake motor is greater than the preset temperature, the motor controller provided in embodiments of this application may control the drive motor to increase the induced current generated with rotation of the wheels, so that a regenerative brake force output by a drive system is increased. With compensation of the regenerative brake force output by the drive system, a brake force output by the service brake unit can be reduced, that is, a torque output by the brake motor can be reduced, so that a drive current in the winding of the brake motor can be reduced. As a result, an over-temperature problem of the brake motor can be alleviated.

### BRIEF DESCRIPTION OF DRAWINGS

FIG. 1 is a diagram of an electric vehicle according to an embodiment of this application;
FIG. 2 is a diagram of an electromechanical brake system according to an embodiment of this application;
FIG. 3 is a diagram of a structure of a wheel brake apparatus according to an embodiment of this application;
FIG. 4 is a diagram of another structure of a wheel brake apparatus according to an embodiment of this application;
FIG. 5 is a diagram of a parking brake unit according to an embodiment of this application;
FIG. 6 is another diagram of an electromechanical brake system according to an embodiment of this application;
FIG. 7 is another diagram of an electromechanical brake system according to an embodiment of this application;
FIG. 8 is a diagram of a structure of a wheel controller according to an embodiment of this application;
FIG. 9 is a diagram of operation of an electromechanical brake system according to an embodiment of this application;
FIG. 10 is a diagram of operation of an electromechanical brake system according to an embodiment of this application;
FIG. 11 is a diagram of operation of an electromechanical brake system according to an embodiment of this application; and
FIG. 12 is a diagram of operation of an electric vehicle according to an embodiment of this application.

### DESCRIPTION OF EMBODIMENTS

Terms used in the following embodiments are merely intended to describe specific embodiments, but are not intended to limit this application. The terms "one", "a", "the", "the foregoing", and "this" of singular forms used in this specification and the appended claims of this application are also intended to include expressions such as "one or more", unless otherwise specified in the context clearly.

Reference to "an embodiment", "some embodiments", or the like described in this specification indicates that one or more embodiments of this application include a specific feature, structure, or characteristic described with reference to the embodiment. Therefore, statements "in an embodiment", "in some embodiments", "in some other embodiments", "in still some other embodiments", and the like in different parts of this specification unnecessarily reference a same embodiment, but mean "one or more embodiments but not all embodiments", unless otherwise specified particularly. Terms "include", "comprise", "have", and variants thereof all mean "include but are not limited to", unless otherwise specified particularly.

With rapid development of electric vehicle technologies and increasing requirements of people for driving comfort, operability, and safety, a brake system is given more responsibilities and duties. The brake system provides a brake force to wheels of an electric vehicle. A current brake system of an electric vehicle includes an electromechanical brake system and an electro-hydraulic brake system. The electromechanical brake system develops rapidly due to advantages of higher safety, faster response, and simpler structure.

The electromechanical brake system includes a wheel brake apparatus. The wheel brake apparatus usually includes a brake actuator and a brake motor. The brake actuator is in transmission connection to a motor shaft of the brake motor. The brake motor is configured to drive the brake actuator to clamp a brake disc. During service braking, the brake motor is configured to drive the brake actuator to clamp the brake disc, to brake the vehicle.

In many service braking scenarios of the electric vehicle, for example, when a driver presses a brake pedal for a long time while waiting at a red light, or when the vehicle is stopped on a slope with an engine running, the brake motor of the electromechanical brake system outputs a torque for a long time and therefore is in a stalled state. Due to the brake motor being in the stalled state for a long time, a temperature of a winding of the brake motor rises rapidly. Consequently, a temperature of the brake motor is excessively high, causing a decrease in a service life of the motor. This affects braking safety of the vehicle.

On this basis, this application provides a wheel brake apparatus and an electromechanical brake system used in an electric vehicle. In a braking scenario of the electric vehicle, when a temperature of a brake motor is excessively high, the wheel brake apparatus and the electromechanical brake system provided in this application can reduce a torque output by the brake motor and control a parking unit to lock the brake motor. In this way, damage caused by over-temperature of the brake motor to the brake motor can be mitigated.

To make the objectives, technical solutions, and advantages of this application clearer, the following further describes this application in detail with reference to the accompanying drawings.

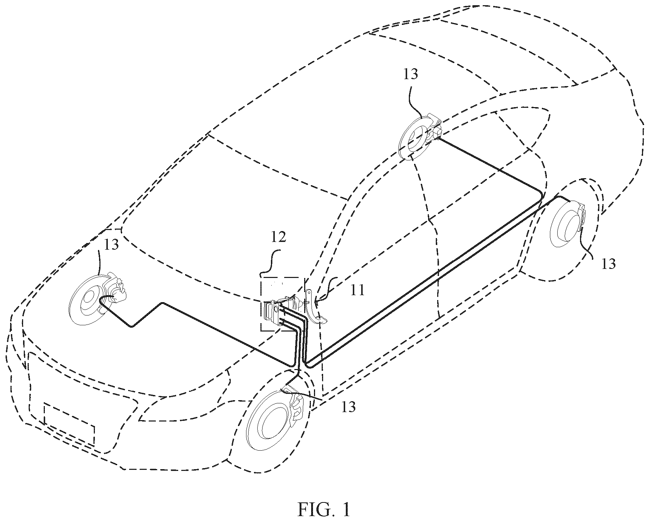

FIG. 1 is a diagram of an electric vehicle 01 according to an embodiment of this application. As shown in FIG. 1, the electric vehicle 01 includes wheels 20 and an electromechanical brake system 10. The electromechanical brake system 10 includes a brake pedal 11, a central controller 12, and four wheel brake apparatuses 13. In a driving process of a driver, when the electric vehicle 01 needs to be braked, the driver presses the brake pedal 11. The central controller 12 receives a brake signal from the brake pedal and outputs torque signals to the four wheel brake apparatuses 13. The wheel brake apparatus 13 is configured to receive the torque signal and output a brake force to a brake disc 14 based on an indication of the torque signal for braking.

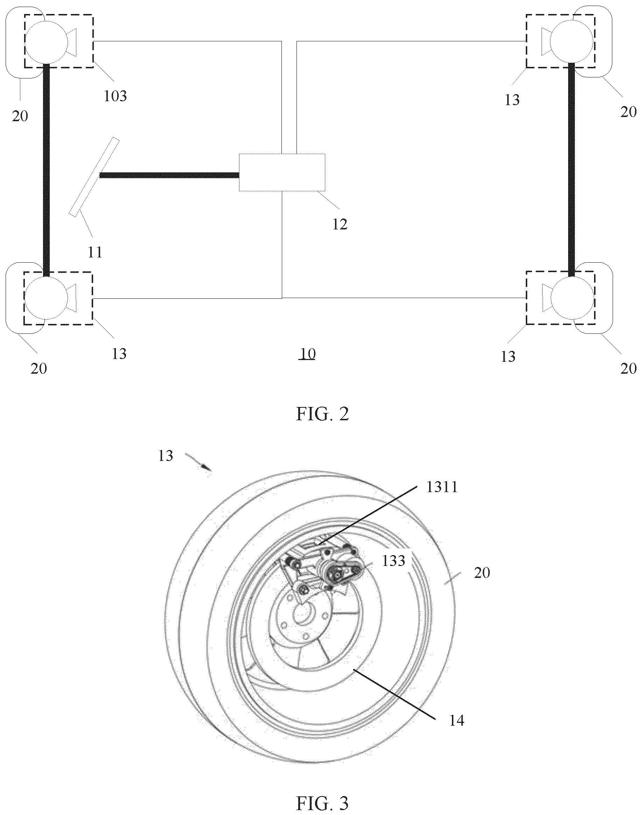

FIG. 2 is a diagram of an electromechanical brake system 10 according to an embodiment of this application. As shown in FIG. 2, the wheel brake apparatus 13 includes a wheel controller 133 and a service brake unit 131. The service brake unit 131 includes a brake motor 1311 and a brake actuator 1312. In a braking process of the electric vehicle 01, the wheel controller 133 is configured to receive the torque signal from the central controller 12 and output a drive current. The drive current is used to drive the brake motor 1311 to output a torque indicated by the torque signal. The brake motor 1311 is configured to drive the brake actuator 1312 to clamp the brake disc 14, so that the brake actuator 1312 outputs a frictional brake force to the brake disc 14, and therefore the electric vehicle 01 generates a deceleration.

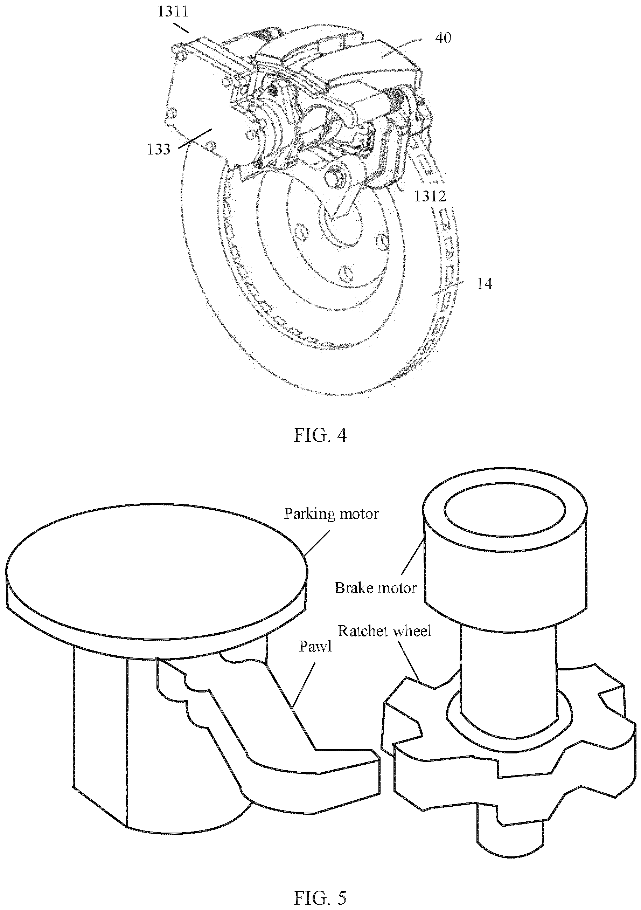

FIG. 3 and FIG. 4 each are a diagram of a wheel brake apparatus 13 according to an embodiment of this application. As shown in FIG. 3 or FIG. 4, the brake actuator 1312 includes a brake caliper. In the braking process of the electric vehicle O1, the wheel controller 133 drives the brake motor 1311 to generate a torque, and then the brake motor 1311 drives the brake caliper to clamp the brake disc 14.

The electromechanical brake system 10 provided in embodiments of this application integrates a parking function. At least one of the four wheel brake apparatuses of the electromechanical brake system integrates a parking brake unit 132. The parking brake unit 132 includes a parking motor 1321 and a parking brake actuator 1322. The parking motor 1321 is configured to drive the parking brake actuator 1322 to lock the brake motor 1311. In the parking process of the electric vehicle 01, the brake motor 1311 drives the brake actuator 1312 to clamp the brake disc, and then the parking brake unit 132 locks the brake motor 1311, so that the brake actuator 1312 remains in a state of clamping the brake disc 14 and therefore the electric vehicle 01 remains in a parked state. In an embodiment, wheel brake apparatuses 13 corresponding to one or two rear wheels of the electric vehicle each integrate a parking brake unit 132. In an embodiment, the wheel brake apparatuses 13 corresponding to the four wheels 20 of the electric vehicle all integrate a parking brake unit 132.

FIG. 5 is a diagram of a parking brake unit 132 according to an embodiment of this application. As shown in FIG. 5, the parking brake unit 132 includes a parking motor 1321 and a parking brake actuator 1322, and the parking brake actuator 1322 includes a pawl and a ratchet wheel that work with each other. The pawl is disposed on a rotor of the parking motor 1321. When the parking motor 1321 rotates, the pawl may be driven to rotate with rotation of the rotor of the parking motor. The ratchet wheel is sleeved on the rotor of the brake motor. During parking of the electric vehicle O1, the parking motor rotates to drive the pawl to rotate, and the pawl may fit into a gear slot of the ratchet wheel, so that the brake motor 1311 is locked.

It should be noted that for ease of describing a function of the parking brake unit 132, FIG. 5 shows an example of a structure. Actually, the parking brake unit 132 provided in embodiments of this application may further include various other structural forms, provided that the parking brake unit 132 can lock the brake motor 1311 to implement the parking function. Details are not described herein.

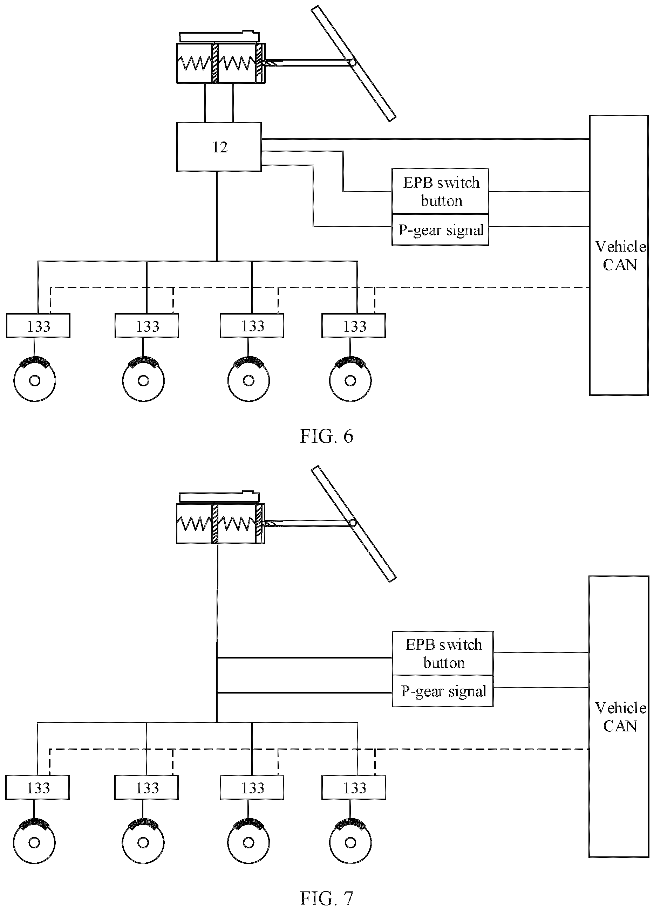

FIG. 6 and FIG. 7 are diagrams of two control architectures of the electromechanical brake system 10.

FIG. 6 shows a central control architecture of the electromechanical brake system 10. As shown in FIG. 6, the central controller 12 is configured to receive a brake signal or a parking signal. The central controller 12 is configured to: in response to the brake signal, output a control signal to the wheel brake apparatus 13. The control signal is used to control the wheel brake apparatus 13 to output a brake force. The brake signal includes at least one of a travel signal of the brake pedal 11, a brake signal from an autonomous driving system, or a brake signal from a vehicle stability system.

The central controller 12 is configured to receive the parking signal. The parking signal may be a signal generated by a driver pressing an EPB button of an electronic parking electromechanical brake (Electronic Parking Brake, EPB) system. The at least one wheel brake apparatus 13 includes the parking brake unit 132. For example, two wheel brake apparatuses 13 corresponding to a rear axle of the electric vehicle 01 each are provided with a parking brake unit 132. After receiving the parking signal, the central controller 12 sends a parking instruction to the wheel controller 133. In response to the parking instruction, the wheel controller 133 controls the parking brake unit 132 to lock the brake motor 1311 to complete a parking process.

In an operation process of the electric vehicle O1, when the central controller 12 receives the parking signal, the central controller 12 transmits the parking signal to the wheel controller 133. The wheel controller 133 first controls the brake motor 1311 to drive the brake actuator 1312 to clamp the brake disc. After the brake disc is clamped, the wheel controller 133 controls the parking motor 1321 to drive the parking brake actuator 1322 to lock the brake motor 1311, so that the brake actuator 1312 remains in a state of clamping the brake disc without releasing, and therefore the electric vehicle 01 remains in a parked state.

The parking signal may be from the EPB system. When the driver presses the EPB button, the electronic parking electromechanical brake system generates the parking signal and transmits the parking signal to the central controller 12. The central controller 12 further sends the parking signal to the wheel controller 133.

In embodiments of this application, the parking signal may alternatively be from another parking system. For example, when the driver adjusts a gear of the electric vehicle 01 to a P gear, the parking signal may be generated. Alternatively, the parking signal may be from an automatic parking (Auto Hold) system. The wheel controller 133 may directly receive the parking signal, or the central controller 12 may first receive the parking signal and then send the parking signal to the wheel controller 133.

FIG. 7 shows a distributed control architecture of the electromechanical brake system. As shown in FIG. 7, the wheel controller 133 may alternatively be configured to directly receive a brake signal or a parking signal. For example, the wheel controller 133 directly receives a parking signal from an EPB button and then controls the parking brake unit 132 to perform a parking process, or the wheel controller 133 directly receives the brake signal and then controls the brake unit to perform a braking process. The wheel controller 133 directly receives the brake signal and the parking signal, and controls the brake unit and the parking brake unit 132, so that a signal transmission link can be shortened. As a result, a control process is faster and more precise.

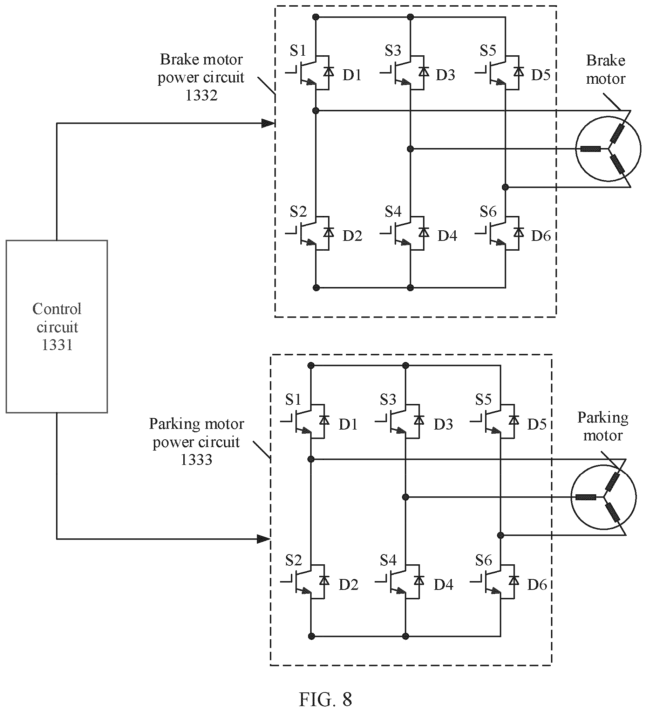

FIG. 8 is a diagram of a specific structure of the wheel controller 133. As shown in FIG. 8, the wheel controller 133 includes a control circuit 1331, a brake motor power circuit 1332, and a parking motor power circuit 1333. The brake motor power circuit 1332 includes a three-phase bridge arm, and a bridge arm midpoint of the three-phase bridge arm of the brake motor power circuit 1332 is configured to connect to a three-phase winding of the brake motor 1311. The parking motor power circuit 1333 includes a three-phase bridge arm, and a bridge arm midpoint of the three-phase bridge arm of the parking motor power circuit 1333 is configured to connect to a three-phase winding of the parking motor 1321. The control circuit 1331 is configured to: control the brake motor power circuit 1332 to output a brake motor drive current to drive the brake motor 1311 to operate, or control the parking motor power circuit 1333 to output a parking motor drive current to drive the parking motor 1321 to operate. In this embodiment of this application, the control circuit 1331 may directly receive a parking signal or a brake signal to control the brake motor power circuit 1332 or the parking motor power circuit 1333, or the control circuit 1331 may control the brake motor power circuit 1332 or the parking motor power circuit 1333 based on an indication of the central controller 12.

The wheel brake apparatus 13 provided in embodiments of this application has a function of over-temperature protection for a brake motor. Specifically, in embodiments of this application, in the braking process of the electric vehicle O1, the wheel controller 133 is configured to: in response to that the temperature of the brake motor 1311 is greater than or equal to the preset temperature, control the brake motor 1311 to reduce an output torque, and control the parking motor 1321 to drive the parking brake actuator 1322 to lock the brake motor 1311; or in response to that a torque output by the brake motor 1311 is greater than or equal to a preset torque for first preset duration, control the brake motor 1311 to reduce the output torque, and control the parking motor 1321 to drive the parking brake actuator 1322 to lock the brake motor 1311.

The wheel brake apparatus 13 provided in embodiments of this application includes the service brake unit 131 and the parking brake unit 132. The service brake unit 131 mainly outputs a brake force to the brake disc during braking of the electric vehicle 01, so that the electric vehicle 01 completes a braking process. The parking brake unit 132 mainly locks the brake motor 1311 during parking of the electric vehicle 01, so that the service brake unit 131 remains in a state of clamping the brake disc, and therefore the electric vehicle 01 completes a parking process. In the braking process of the electric vehicle O1, the brake motor 1311 is configured to output the torque to drive the brake actuator 1312 to output a brake force to the brake disc, and the brake motor 1311 is usually in a stalled state, causing the temperature of the brake motor 1311 to rise rapidly. In this case, the brake motor 1311 is in a high-temperature state for a long time; consequently, a service life of the brake motor 1311 is decreased, and operation reliability of the brake motor 1311 is affected. When the temperature of the brake motor 1311 is relatively high, the wheel brake apparatus 13 provided in embodiments of this application may control the parking brake unit 132 to lock the brake motor 1311, so that the brake motor 1311 can reduce the output torque. In this case, a drive current passing through a winding of the brake motor 1311 is reduced, and heat generated on the winding of the brake motor 1311 is also reduced. In this way, heat load of the brake motor 1311 can be reduced, an operating life of the brake motor 1311 can be increased, and safety and reliability of the brake motor 1311 can be improved. That the torque output by the brake motor 1311 is greater than or equal to the preset torque for the first preset duration may be used as an indirect basis for determining that the brake motor 1311 is over temperature. In other words, if the torque output by the brake motor 1311 is greater than or equal to the preset torque for the first preset duration, it is determined that the brake motor 1311 is in the stalled state for a long time and therefore is over temperature.

For example, in a traveling process of the electric vehicle 01, the driver presses the brake pedal 11 or the autonomous driving system outputs a brake signal, and the wheel brake apparatus 13 outputs a fixed brake force. In this case, if the brake motor 1311 is over temperature, the parking brake unit 132 may lock the brake motor 1311, so that the brake actuator 1312 maintains a clamping force to provide a brake force to the brake disc. When the driver changes a position percentage of the brake pedal 11, the parking brake unit 132 unlocks the brake motor 1311, and the brake motor 1311 drives the brake actuator 1312 to change the output clamping force.

The brake motor 1311 provided in embodiments of this application is provided with a temperature sensor, configured to monitor the temperature of the brake motor 1311. In an embodiment, the temperature sensor may be disposed on a housing surface of the brake motor 1311, at the winding of the brake motor 1311, or at a stator and the rotor of the brake motor 1311. That is, the temperature of the brake motor 1311 described in this application may be a housing temperature, a winding temperature, a stator temperature, or a rotor temperature of the brake motor 1311. In an embodiment, the temperature of the brake motor 1311 is a highest temperature among temperatures of various parts of the motor. For example, the temperature sensor monitors the housing temperature, the winding temperature, the stator temperature, or the rotor temperature of the brake motor 1311 at the same time, and then uses the highest temperature among the housing temperature, the winding temperature, the stator temperature, or the rotor temperature of the brake motor 1311 as the temperature of the brake motor 1311. In an embodiment, the temperature of the brake motor 1311 is an average temperature of temperatures of various parts of the motor. For example, the temperature sensor monitors the housing temperature, the winding temperature, the stator temperature, or the rotor temperature of the brake motor 1311 at the same time, and then uses an average temperature of these temperatures as the temperature of the brake motor 1311.

The wheel controller in embodiments of this application may directly receive a brake motor temperature signal from the temperature sensor, and perform the foregoing control actions when the brake motor is over temperature. Alternatively, the wheel controller in embodiments of this application may perform the foregoing control actions according to an instruction of the central controller 12 when the brake motor is over temperature. In other words, the central controller 12 receives a brake motor temperature signal from the temperature sensor, and sends a control instruction when the brake motor is over temperature, to control the wheel controller 133 to perform the foregoing control actions. That is, the wheel controller 133 may directly or indirectly respond to the temperature of the brake motor.

The preset torque provided in embodiments of this application is obtained through calculation in advance based on a heat generation status of the brake motor 1311 in a process of outputting of a stall torque, and is stored in a storage apparatus of the control circuit 1331. For example, heat generation statuses of the brake motor 1311 in a process of outputting different torques may be calibrated. When the temperature of the brake motor 1311 reaches the preset temperature after the brake motor 1311 is at a specific torque for the first preset duration, the torque is used as the preset torque.

In embodiments of this application, the wheel controller 133 may alternatively use another condition as a basis for determining that the brake motor 1311 needs to perform derated output to implement over-temperature protection for the brake motor 1311. In an embodiment, the wheel controller 133 is configured to: in response to that a travel of the brake pedal 11 is greater than or equal to a preset travel for a second preset duration, control the brake motor 1311 to reduce the output torque, and control the parking motor 1321 to drive the parking brake actuator 1312 to lock the brake motor 1311; or in response to that a clamping force output by the brake actuator 1312 is greater than a preset clamping force for the first preset duration, control the brake motor 1311 to stop outputting the torque, and control the parking motor 1321 to drive the parking brake actuator 1312 to lock the brake motor 1311.

In the braking process, if the driver deeply presses the brake pedal 11 for a long time, the brake motor 1311 is in the stalled state and prone to be over temperature. Therefore, if the travel of the brake pedal 11 is greater than or equal to the preset travel for the second preset duration, it is determined that the brake motor 1311 is stalled and over temperature. Then, the wheel controller 133 controls the parking motor 1321 to drive the parking brake actuator 1312 to lock the brake motor 1311, so that the brake actuator 1312 remains in a fixed clamping state and outputs a clamping force.

In an embodiment, in the braking process of the electric vehicle 01, the wheel controller 133 is configured to: in response to that the temperature of the brake motor 1311 is greater than or equal to the preset temperature and a rotation speed of the drive motor, a vehicle speed of the electric vehicle 01, or a wheel speed of wheels 20 of the electric vehicle 01 is less than a preset speed, control the brake motor 1311 to reduce the output torque, and control the parking motor 1321 to drive the parking brake actuator 1312 to lock the brake motor 1311; or in response to that the torque output by the brake motor 1311 is greater than or equal to a first preset torque for the first preset duration and a rotation speed of the drive motor, a vehicle speed of the electric vehicle O1, or a wheel speed of wheels 20 of the electric vehicle 01 is less than a preset speed, control the brake motor 1311 to reduce the output torque, and control the parking motor 1321 to drive the parking brake actuator 1312 to lock the brake motor 1311.

In the braking process, if the rotation speed of the drive motor, the vehicle speed of the electric vehicle 01, or the wheel speed of the wheels 20 of the electric vehicle 01 decreases from less than the preset speed to a very small value, it indicates that the driver intends to brake the electric vehicle 01 to a stop. In this case, if the brake motor 1311 is over temperature, the parking motor 1321 may be controlled to drive the parking brake actuator 1312 to lock the brake motor 1311, so that the brake actuator 1312 remains in a fixed clamping state and outputs a clamping force.

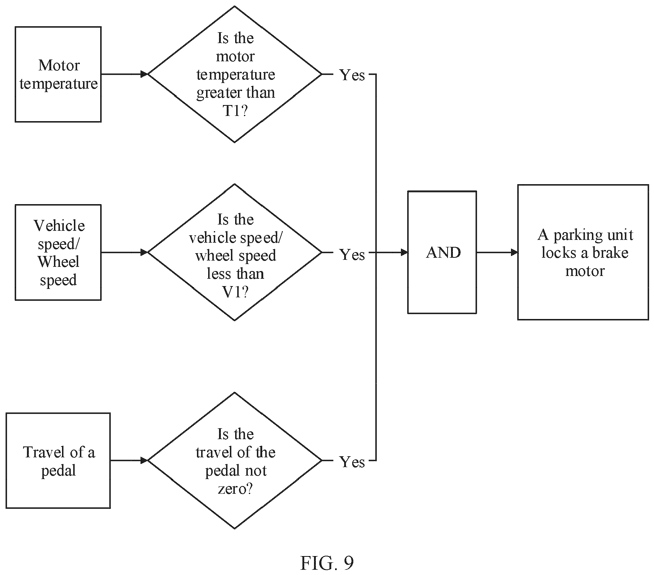

FIG. 9 is a diagram depicting the wheel controller controlling the parking motor 1321 to drive the parking brake actuator 1312 to lock the brake motor 1311.

In an embodiment, in the braking process of the electric vehicle 01, the wheel controller 133 is configured to: in response to that the temperature of the brake motor 1311 is greater than or equal to the preset temperature and the rotation speed of the drive motor, the vehicle speed of the electric vehicle O1, or the wheel speed of the wheels 20 of the electric vehicle 01 is zero, control the brake motor 1311 to reduce the output torque, and control the parking motor 1321 to drive the parking brake actuator 1312 to lock the brake motor 1311; or in response to that the torque output by the brake motor 1311 is greater than or equal to the first preset torque for the first preset duration and the rotation speed of the drive motor, the vehicle speed of the electric vehicle O1, or the wheel speed of wheels 20 of the electric vehicle 01 is zero, control the brake motor 1311 to reduce the output torque, and control the parking motor 1321 to drive the parking brake actuator 1312 to lock the brake motor 1311.

When the electric vehicle 01 is stopped for a long time with braking applied, the brake motor 1311 keeps in the stalled state, and the temperature of the brake motor 1311 rises rapidly. For example, in a process in which the driver keeps pressing the brake pedal 11 while waiting at a red light, or in a process in which the driver presses the brake pedal 11 while stopping the vehicle on a slope with braking applied, parking braking may be performed when the temperature of the brake motor 1311 is excessively high. After performing parking braking, the electric vehicle 01 is in a braking state. If the driver releases the brake pedal 11 and prepares for driving, the wheel controller 133 first controls the parking brake unit 132 to unlock the brake motor 1311, and then enables the electric vehicle 01 to continue traveling.

In an embodiment, in a process in which the brake motor 1311 stops outputting the torque and the parking motor 1321 is controlled to drive the parking brake actuator 1312 to lock the brake motor 1311, a higher temperature of the brake motor 1311 indicates a larger amount by which the torque output by the brake motor 1311 is reduced.

In the braking process of the electric vehicle O1, a higher temperature of the brake motor 1311 indicates that the torque output by the brake motor 1311 can be reduced more. This is more conducive to alleviation of an over-temperature problem of the brake motor 1311.

In an embodiment, in the braking process of the electric vehicle 01, the wheel controller 133 is configured to: in response to that a winding temperature of the brake motor 1311 decreases from greater than or equal to a first preset temperature to less than the first preset temperature or the rotation speed of the drive motor, control the parking motor 1321 to drive the parking brake actuator 1312 to unlock the brake motor 1311; or in response to that a torque indicated by a torque signal decreases from greater than or equal to the first preset torque to less than the first preset torque, first control the parking motor 1321 to unlock the brake motor 1311, and then control the brake motor 1311 to output the torque indicated by the torque signal.

In an embodiment, the wheel controller 133 is configured to: first control the parking motor 1321 to drive the parking brake actuator 1312 to lock the brake motor 1311, and then control the brake motor 1311 to reduce the output torque. According to the foregoing embodiment, after the brake motor 1311 is over temperature, the wheel controller 133 needs to first control the parking motor 1321 to drive the parking brake actuator 1312 to lock the brake motor 1311, and then control the brake motor 1311 to reduce the output torque.

In an embodiment, the wheel controller 133 is configured to: in response to stopping receiving a brake signal when controlling the parking motor 1321 to drive the parking brake actuator 1312 to lock the brake motor 1311, control the parking motor 1321 to unlock the brake motor 1311, and control the brake motor 1311 to stop outputting the torque.

The wheel controller 133 stops receiving the brake signal, which indicates that the electric vehicle 01 does not need to continue to be in the braking state. In this case, the wheel controller 133 is configured to: first control the parking brake unit 132 to unlock the brake motor 1311, and after a locked state of the brake motor 1311 is released, control the service brake unit 131 to stop outputting the brake force, so that the electric vehicle 01 continues traveling.

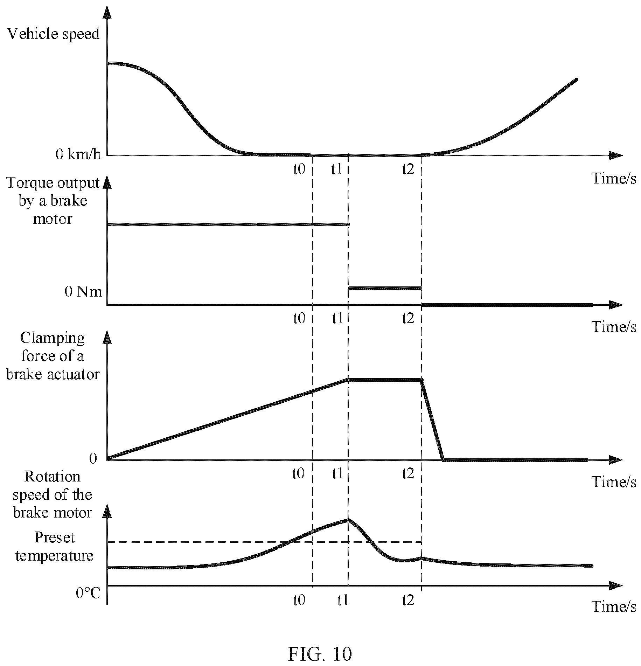

As shown in FIG. 10, the foregoing control process may be divided into three phases. At a moment 0, the central controller 12 or the wheel controller 133 receives the brake signal. The brake motor 1311 drives the brake actuator 1312 to clamp the brake disc, and the speed of the electric vehicle 01 starts to decrease. The vehicle speed decreases to 0 at a moment t0.

From the moment t0 to a moment t1, the electric vehicle is in a state of being stopped with braking applied. In this case, the driver still presses the brake pedal 11, the brake motor 1311continuously outputs the torque and is in the stalled state, the clamping force output by the brake actuator 1312 continues to be increased, and the temperature of the brake motor 1311 rises.

At the moment t1, the motor temperature exceeds the preset temperature. The wheel controller 133 controls the parking brake unit 132 to lock the brake motor 1311, so that the brake actuator 1312 remains in a fixed clamping position. After the brake motor 1311 is locked, the brake motor 1311 may reduce the output torque to a relatively small value or directly to zero. Because the torque output by the brake motor 1311 is reduced, the temperature of the brake motor 1311 starts to decrease.

At a moment t2, the central controller 12 or the wheel controller 133 stops receiving the brake signal. The electric vehicle 01 is no longer in the braking state. The wheel controller 133 first controls the parking brake unit 132 to unlock the brake motor 1311, and then the brake motor 1311 rotates in a reverse direction, so that the brake actuator 1312 no longer clamps the brake disc. If the driver further presses an acceleration pedal, the vehicle speed of the electric vehicle 01 starts to increase, and the electric vehicle 01 starts to travel.

For the foregoing embodiments related to the wheel controller 133, whether the control architecture of the electromechanical brake system is the central control architecture or the distributed control architecture is not limited. The following describes, with reference to specific embodiments, an implementation of the following: in the central control architecture, when the brake motor 1311 is over temperature, the central controller 12 controls the wheel brake apparatus 13 to lock the brake motor 1311, to perform over-temperature protection for the brake motor 1311.

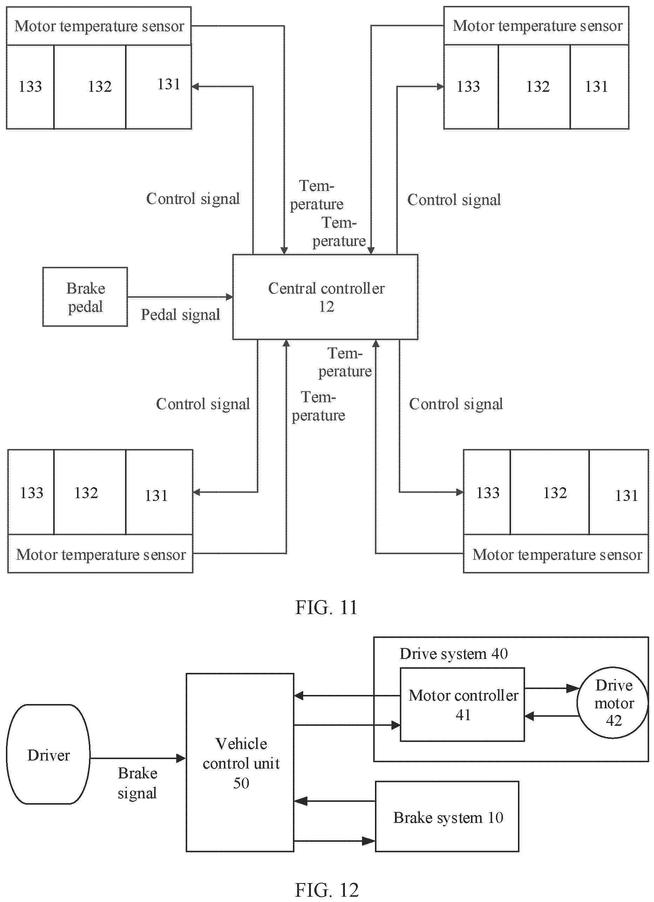

FIG. 11 is a diagram depicting the central controller 12 controlling the wheel brake apparatus 13. As shown in FIG. 11, the central controller 12 is connected to the brake pedal 11, to receive a travel signal of the pedal from the brake pedal 11. The central controller 12 receives a motor temperature signal obtained through monitoring by a motor temperature sensor. The central controller 12 outputs a control signal. The control signal is used to control a brake force of the service brake unit 131 or control the parking brake unit 132 to lock the brake motor 1311.

In this embodiment of this application, in the braking process of the electric vehicle O1, the central controller 12 is configured to: in response to that the temperature of the brake motor 1311 is greater than or equal to the preset temperature, control the at least one wheel brake apparatus 13 to reduce the output torque and to lock the brake motor 1311; or in response to that the torque output by the brake motor 1311 is greater than or equal to the preset torque for the first preset duration, control the at least one wheel brake apparatus 13 to reduce the output torque and to lock the brake motor 1311.

In an embodiment, in the braking process of the electric vehicle 01, the central controller 12 is configured to: in response to that the temperature of the brake motor 1311 is greater than or equal to the preset temperature and the rotation speed of the drive motor, the vehicle speed of the electric vehicle O1, or the wheel speed of the wheels 20 of the electric vehicle 01 is less than the preset speed, control the at least one wheel brake apparatus 13 to reduce the output torque and to lock the brake motor 1311; or in response to that the torque output by the brake motor 1311 is greater than or equal to the first preset torque for the first preset duration and the rotation speed of the drive motor, the vehicle speed of the electric vehicle O1, or the wheel speed of the wheels 20 of the electric vehicle 01 is less than the preset speed, control the at least one wheel brake apparatus 13 to reduce the output torque and to lock the brake motor 1311.

The electric vehicle 01 provided in embodiments of this application includes the electromechanical brake system 10 and a drive system 40. The drive system 40 includes a motor controller 41 and a drive motor 42. The drive system 40 provided in this embodiment of this application has a function of energy recovery. Energy recovery means that when the electric vehicle 01 is in a braking state, the wheels 20 drive the drive motor 42 to rotate, the drive motor 42 operates in a power generation state, outputs a negative torque, and converts kinetic energy of the electric vehicle 01 into electric energy. The drive motor 42 may provide a regenerative brake force to the electric vehicle 01 while generating power. FIG. 12 is a diagram of an execution principle of energy recovery. As shown in FIG. 12, when the driver presses the brake pedal, a vehicle control unit 50 is configured to receive a brake control signal from a brake controller 32 and send an energy recovery instruction to the motor controller 11, and the motor controller 41 controls the drive motor 42 to operate in the power generation state. The drive motor 42 rotates with the wheels 20 and outputs a three-phase alternating current. The motor controller 41 receives the three-phase alternating current output by the drive motor 42, and converts the three-phase alternating current into a direct current to charge a power battery. In a process of energy recovery, the drive motor 42 outputs a negative torque, so that the electric vehicle 01 generates a deceleration. A brake force generated by the drive motor 42 outputting the negative torque in the process of energy recovery is a regenerative brake force. The motor controller 41 may control energy recovery intensity of the drive system in the process of energy recovery, to control a magnitude of the regenerative brake force generated by the drive system.

The drive motor 42 is configured to generate an induced current with rotation of the wheels 20 in the braking process of the electric vehicle 01. In the braking process of the electric vehicle O1, the motor controller is configured to: in response to that the temperature of the brake motor 1311 is greater than or equal to the preset temperature, control the drive motor to increase the induced current generated with rotation of the wheels 20; or in response to that the torque output by the brake motor 1311 is greater than or equal to the preset torque for the first preset duration, control the drive motor to increase the induced current generated with rotation of the wheels 20.

When the temperature of the brake motor 1311 is greater than the preset temperature, the motor controller 41 provided in this embodiment of this application may control the drive motor to increase the induced current generated with rotation of the wheels 20, so that the regenerative brake force output by the drive system is increased. With compensation of the regenerative brake force output by the drive system, the brake force output by the service brake unit 131 can be reduced, that is, the torque output by the brake motor 1311 can be reduced, so that a drive current in the winding of the brake motor 1311 can be reduced. As a result, an over-temperature problem of the brake motor 1311 can be alleviated.

Although this application is described with reference to specific features and embodiments thereof, it is clear that various modifications and combinations may be made to them without departing from the scope of this application. Correspondingly, the specification and accompanying drawings are merely example description of this application defined by the accompanying claims, and are considered as any of or all modifications, variations, combinations or equivalents that cover the scope of this application.

It is clear that a person skilled in the art can make various modifications and variations to this application without departing from the scope of protection of this application. This application is intended to cover these modifications and variations of this application provided that they fall within the scope of protection defined by the following claims and their equivalent technologies.

## Claims

1. A wheel brake apparatus with a function of over-temperature protection for a brake motor, used in an electric vehicle, wherein the wheel brake apparatus comprises a service brake unit and a parking brake unit, the service brake unit comprises a brake motor and a brake actuator, the brake motor is configured to output a torque to drive the brake actuator to brake a brake disc of the electric vehicle, and the parking brake unit is configured to lock the brake motor, wherein in a braking process of the electric vehicle,
in response to that a temperature of the brake motor is greater than or equal to a preset temperature or that the torque output by the brake motor is greater than or equal to a preset torque for first preset duration, the parking brake unit locks the brake motor, and the brake motor reduces the output torque.

2. The wheel brake apparatus according to claim 1, wherein in the braking process of the electric vehicle, in response to that the temperature of the brake motor is greater than or equal to the preset temperature and a rotation speed of a drive motor, a vehicle speed of the electric vehicle, or a wheel speed of the electric vehicle is less than a preset speed, the brake motor reduces the output torque, and the parking brake unit locks the brake motor; or
in response to that the torque output by the brake motor is greater than or equal to a first preset torque for the first preset duration and a rotation speed of the drive motor, a vehicle speed of the electric vehicle, or a wheel speed of the electric vehicle is less than a preset speed, the brake motor reduces the output torque, and the parking brake unit locks the brake motor.

3. The wheel brake apparatus according to claim 2, wherein in the braking process of the electric vehicle, in response to that the temperature of the brake motor is greater than or equal to the preset temperature and the rotation speed of the drive motor, the vehicle speed of the electric vehicle, or the wheel speed of the electric vehicle is zero, the parking brake unit locks the brake motor, and the brake motor reduces the output torque; or
in response to that the torque output by the brake motor is greater than or equal to the first preset torque for the first preset duration and the rotation speed of the drive motor, the vehicle speed of the electric vehicle, or the wheel speed of the electric vehicle is zero, the brake motor reduces the output torque, and a parking motor drives a parking brake actuator to lock the brake motor.

4. The wheel brake apparatus according to claim 1, wherein the brake actuator is configured to output a clamping force to the brake disc, wherein the clamping force is used to generate a brake force between the brake actuator and the brake actuator, and in the braking process of the electric vehicle, in response to that a travel of a brake pedal is greater than or equal to a preset travel for a second preset duration, the brake motor reduces the output torque, and a parking motor drives a parking brake actuator to lock the brake motor; or
in response to that the clamping force output by the brake actuator is greater than a preset clamping force for the first preset duration, the brake motor reduces the output torque, and a parking motor drives a parking brake actuator to lock the brake motor.

5. The wheel brake apparatus according to any one of claims 1 to 4, wherein the wheel brake apparatus further comprises a wheel controller, and in the braking process of the electric vehicle, the wheel controller is configured to: control the brake motor to reduce the output torque, and control the parking motor to drive the parking brake actuator to lock the brake motor;
wherein the wheel controller is configured to:
first control the parking motor to drive the parking brake actuator to lock the brake motor, and then control the brake motor to reduce the output torque.

6. The wheel brake apparatus according to claim 5, wherein in a process in which the brake motor reduces the output torque and the parking motor is controlled to drive the parking brake actuator to lock the brake motor, a higher temperature of the brake motor indicates a larger amount by which the torque output by the brake motor is reduced.

7. The wheel brake apparatus according to claim 5, wherein the wheel controller is configured to receive a torque signal, and in the braking process of the electric vehicle, the wheel controller is configured to:
in response to that the temperature of the brake motor decreases from greater than or equal to the preset temperature to less than the preset temperature, control the parking motor to drive the parking brake actuator to unlock the brake motor; or
in response to that a torque indicated by the torque signal decreases from greater than or equal to the first preset torque to less than the first preset torque, first control the parking motor to unlock the brake motor, and then control the brake motor to output the torque indicated by the torque signal.

8. The wheel brake apparatus according to claim 5, wherein the wheel controller is configured to:
in response to stopping receiving a brake signal in a process in which the parking brake actuator locks the brake motor, control the parking motor to drive the parking brake actuator to unlock the brake motor, and control the brake motor to stop outputting the torque, wherein the brake signal indicates the wheel brake apparatus to output a brake force, and the brake signal comprises at least one of a travel signal of the brake pedal, a brake signal from an autonomous driving system, or a brake signal from a vehicle stability system.

9. The wheel brake apparatus according to any one of claims 1 to 8, wherein the parking brake actuator comprises a pawl and a ratchet wheel, the ratchet wheel is sleeved on a rotor of the brake motor, and the parking motor is configured to drive the pawl to work with the ratchet wheel to lock the brake motor.

10. The wheel brake apparatus according to any one of claims 5 to 8, wherein the wheel brake apparatus further comprises a temperature sensor and a clamping force sensor, and the wheel controller is configured to receive a brake motor temperature signal from the temperature sensor and a clamping force signal from the clamping force sensor, wherein the brake motor temperature signal indicates the temperature of the brake motor, and the clamping force signal indicates the clamping force output by the brake actuator.

11. The wheel brake apparatus according to any one of claims 5 to 8, wherein the wheel controller comprises a brake motor power circuit, a parking motor power circuit, and a control circuit;
the brake motor power circuit comprises a three-phase bridge arm, and a bridge arm midpoint of the three-phase bridge arm of the brake motor power circuit is configured to connect to a three-phase winding of the brake motor;
the parking motor power circuit comprises a three-phase bridge arm, and a bridge arm midpoint of the three-phase bridge arm of the parking motor power circuit is configured to connect to a three-phase winding of the parking motor; and
the control circuit is configured to: receive the brake signal, and control the bridge arm midpoint of the three-phase bridge arm of the brake motor power circuit to output a brake motor drive current or control the bridge arm midpoint of the three-phase bridge arm of the parking motor power circuit to output a parking motor drive current.

12. An electromechanical brake system with a function of over-temperature protection for a brake motor, used in an electric vehicle, wherein the electromechanical brake system comprises four wheel brake apparatuses and a central controller;
at least one of the four wheel brake apparatuses comprises a service brake unit and a parking brake unit, the service brake unit comprises a brake motor and a brake actuator, the brake motor is configured to: when the electric vehicle is in a braking state, output a torque to drive the brake actuator to output a brake force to a brake disc, and the parking brake unit is configured to lock the brake motor; and
in a braking process of the electric vehicle, the central controller is configured to:
in response to that a temperature of the brake motor is greater than or equal to a preset temperature, control the at least one wheel brake apparatus to reduce the output torque and to lock the brake motor; or
in response to that the torque output by the brake motor is greater than or equal to a preset torque for first preset duration, control the at least one wheel brake apparatus to reduce the output torque and to lock the brake motor.

13. The electromechanical brake system according to claim 12, wherein in the braking process of the electric vehicle, the central controller is configured to:
in response to that the temperature of the brake motor is greater than or equal to the preset temperature and a rotation speed of the drive motor, a vehicle speed of the electric vehicle, or a wheel speed of wheels of the electric vehicle is less than a preset speed, control the at least one wheel brake apparatus to reduce the output torque and to lock the brake motor; or
in response to that the torque output by the brake motor is greater than or equal to a first preset torque for the first preset duration and a rotation speed of the drive motor, a vehicle speed of the electric vehicle, or a wheel speed of wheels of the electric vehicle is less than the preset speed, control the at least one wheel brake apparatus to reduce the output torque and to lock the brake motor.

14. The electromechanical brake system according to claim 10, wherein the wheel brake apparatus comprises a wheel controller, and the central controller is configured to:
in response to a brake signal, output a control signal to the wheel controller; and
the wheel controller is configured to:
in response to the control signal, control the brake motor to reduce the output torque, and control the parking unit to lock the brake motor, wherein
the brake signal indicates that the electric vehicle is in a braking state, and the brake signal comprises at least one of a travel signal of a brake pedal, a brake signal from an autonomous driving system, or a brake signal from a vehicle stability system.

15. An electric vehicle, wherein the electric vehicle comprises a drive system and the electromechanical brake system according to any one of claims 12 to 14, the drive system comprises a motor controller and a drive motor, the drive motor is configured to generate an induced current with rotation of the wheels in a braking process of the electric vehicle, and in the braking process of the electric vehicle, the motor controller is configured to:
in response to that a temperature of the brake motor is greater than or equal to a preset temperature, control the drive motor to increase the induced current generated with rotation of the wheels; or
in response to that a torque output by the brake motor is greater than or equal to a preset torque for first preset duration, control the drive motor to increase the induced current generated with rotation of the wheels.
